(19) Europäisches Patentamt
European Patent Office
Office européen des brevets

(11) EP 2 993 593 A1

(12) EUROPEAN PATENT APPLICATION

(43) Date of publication:
09.03.2016 Bulletin 2016/10

(51) Int Cl.:
G06F 17/30 (2006.01)          H04L 29/12 (2006.01)
H04N 21/262 (2011.01)

(21) Application number: 15181877.0

(22) Date of filing: 20.08.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 02.09.2014 US 201414475416

(71) Applicant: Palo Alto Research Center,
Incorporated
Palo Alto, CA 94304 (US)

(72) Inventor: MOSKO, Marc E.
Santa Cruz, CA California 95060 (US)

(74) Representative: Gill Jennings & Every LLP
The Broadgate Tower
20 Primrose Street
London EC2A 2ES (GB)

(54) SYSTEM AND METHOD FOR A RELIABLE CONTENT EXCHANGE OF A CCN PIPELINE STREAM

(57) A client device can establish a reliable content exchange (RCX) session with a hosting service over a Content Centric Network (CCN) to send a reliable pipelined flow of data to the hosting service. During operation, the client device can provide authentication information to the hosting service, and initiates an RCX control channel with the hosting service. The client device can select content to send to the hosting service, and uses the control channel to send an Exchange-initialization request that establishes an Exchange session for transferring the content to the hosting service. The Exchange-initialization request includes a collection name associated with the selected content, and an Exchange identifier (XID) for the Exchange session. The client device can then receive an Interest that requests a segment of the selected content over the Exchange session, and can return a Content Object whose payload includes the requested segment of the content.

ENVIRONMENT
100

FIG. 1

EP 2 993 593 A1

**Description**

**BACKGROUND**

**Field**

This disclosure is generally related to Content Centric Networks (CCN). More specifically, this disclosure is related to establishing a channel between CCN nodes for a reliable content exchange over CCN.

**Related Art**

The proliferation of mobile computing and cellular networks is making digital content more mobile than ever before. People can use their smartphones to generate content, to consume content, or even to provide Internet access to other computing devices that generate or consume content. Oftentimes, a device's network location can change as a person takes their mobile computing device to a new physical location. This can make it difficult to communicate with this device under a traditional computer network (e.g., the Internet) when the device's new network location is not known.
To solve this problem, content-centric network (CCN) architectures have been designed to facilitate accessing digital content based on its name, regardless of the content's physical or network location. A typical CCN architecture forwards two types of packets: Interests and Content Objects. Interests include a name for a piece of named data (and serve as a request for the piece of named data). Content Objects, on the other hand, typically include a payload, and are forwarded along a network path that has been traversed by an Interest with a matching name, and traverse this path in the reverse direction taken by the Interest packet.
Some content producers allow a custodian device to host content on behalf of the content producer over CCN. This custodian typically receives the content when the custodian along the forwarding path for the content, or by requesting the content explicitly from the content producer. However, if the custodian retrieves a data stream from the content producer over CCN by disseminating Interests for chunks of the content, it is possible for the custodian to receive content from devices other than the content producer, or to not receive some chunks of the content. For example, because the CCN architecture allows any CCN node to respond to a typical Interest if it can produce a Content Object that satisfies the Interest, it is possible for a malicious entity to inject malicious or erroneous data into the data stream to the hosting service. Also, if the chunks of data correspond to a live data stream (e.g., streaming video), it is possible that the content producer may delete a chunk of data that it has sent to the custodian, even when the chunk failed to reach the custodian due to network errors.

**SUMMARY**

One embodiment provides a client device that can establish a content exchange session with a hosting service over a Content Centric Network (CCN). During operation, the client device can initiate a control channel with the hosting service, and uses this control channel to establish one or more Exchange sessions with the hosting service. When the client device needs to send content to the hosting service, the client device can establish an Exchange session for transferring the content to the hosting service. For example, the client device can generate an Exchange identifier (XID) for the new Exchange session that will be used to send the content to the hosting service, and sends an Exchange-initialization request to the hosting service via the control channel. The Exchange-initialization request includes a collection name associated with the content and the XID for the Exchange session. Then, responsive to receiving an Interest that requests a segment of the content over the Exchange session, the client can return a Content Object whose payload includes the requested segment of the content.
In content centric networks (CCN), each piece of content is individually named, and each piece of data is bound to a unique name that distinguishes the data from any other piece of data, such as other versions of the same data or data from other sources. This unique name allows a network device to request the data by disseminating a request or an Interest that indicates the unique name, and can obtain the data independent from the data's storage location, network location, application, and means of transportation. The following terms describe elements of a CCN architecture:

Content Object: A single piece of named data, which is bound to a unique name. Content Objects are "persistent," which means that a Content Object can move around within a computing device, or across different computing devices, but does not change. If any component of the Content Object changes, the entity that made the change creates a new Content Object that includes the updated content, and binds the new Content Object to a new unique name.

Unique Names: A name in a CCN is typically location independent and uniquely identifies a Content Object. A data-forwarding device can use the name or name prefix to forward a packet toward a network node that generates or stores the Content Object, regardless of a network address or physical location for the Content Object. In some embodiments, the name may be a hierarchically structured variable-length identifier (HSVLI). The HSVLI can be divided into several hierarchical components, which can be structured in various ways. For example, the individual name components parc, home, ccn, and test.txt can be structured in a left-oriented prefix-major fashion to form the name "/parc/home/ccn/test.txt." Thus, the name "/parc/home/ccn" can be a "parent" or "prefix" of "/parc/home/ccn/test.txt." Additional components can be used to distinguish between different versions of the content item, such as a collaborative document.

In some embodiments, the name can include an identifier, such as a hash value that is derived from the Content Object's data (e.g., a checksum value) and/or from elements of the Content Object's name. A description of a hash-based name is described in U.S. Patent Application No. 13/847,814 (Atty. Docket No. PARC-20120537-US-NP, entitled "ORDERED-ELEMENT NAMING FOR NAME-BASED PACKET FORWARDING," by inventor Ignacio Solis, filed 20 March 2013), which is hereby incorporated by reference. A name can also be a flat label. Hereinafter, "name" is used to refer to any name for a piece of data in a name-data network, such as a hierarchical name or name prefix, a flat name, a fixed-length name, an arbitrary-length name, or a label (e.g., a Multiprotocol Label Switching (MPLS) label).

Interest: A packet that indicates a request for a piece of data, and includes a name (or a name prefix) for the piece of data. A data consumer can disseminate a request or Interest across an information-centric network, which CCN routers can propagate toward a storage device (e.g., a cache server) or a data producer that can provide the requested data to satisfy the request or Interest.

While the methods disclosed herein are described based on a CCN architecture, the methods disclosed herein are also applicable to other information centric network (ICN) architectures as well. A description of a CCN architecture is described in U.S. Patent Application No. 12/338,175 (Atty. Docket No. PARC-20080626-US-NP, entitled "CONTROLLING THE SPREAD OF INTERESTS AND CONTENT IN A CONTENT CENTRIC NETWORK," by inventors Van L. Jacobson and Diana K. Smetters, filed 18 December 2008), which is hereby incorporated by reference.

In some embodiments, the content includes a collection of data chunks that are numbered sequentially, and wherein the collection name includes a Chunked Name for the content.

In some embodiments, the client device providing authentication information to the hosting service while the client device initiates the control channel with the hosting service.

In some embodiments, the collection name includes a Manifest name for the content, wherein the Manifest name is derived based on objects named in a Manifest for the content.

In some embodiments, while sending the Exchange-initialization request to the hosting service, the client device sends a second Interest message whose name comprises the first name prefix of the hosting service, a session identifier (SID) for the control channel, the name associated with the content, and the XID.

In some embodiments, responsive to sending the Exchange-initialization request to the hosting service, the client device can receive an acknowledgement (ACK) message that includes the XID and a session identifier (SID) for the control channel.

In some variations to these embodiments, the second Interest message name includes the content name and the XID encrypted using a session key associated with the control channel.

In some embodiments, the client device can send, to the hosting service, a Status-request message that includes the XID that identifies the Exchange session. The client then receives an ACK message that includes a Cumulative ACK Name (CAN) to acknowledge a set of ordered Content Objects received via the Exchange session. The CAN includes a name for a latest Content Object in the set of ordered Content Objects, which acknowledges the set of ordered Content Objects whose names are up to and including the latest Content Object's name.

In some embodiments, the client device can send, to the hosting service, a NEXT message that specifies a next object that can be requested by the hosting service.

In some embodiments, the client device can close the Exchange session. To close the Exchange session, the client device can send an Interest that includes an Exchange-closing request that includes the XID. Then, in response to receiving a Content Object that acknowledges the Exchange-closing request, the client device closes the Exchange session.

One embodiment provides a hosting service that hosts content from one or more clients or content producers. During operation, the hosting service can initialize a control channel with a client device, and sends a session identifier (SID) for the control channel to the client device. The hosting service can receive an Exchange-initialization request from the client device, via the control channel. The Exchange-initialization request can include an Exchange identifier (XID) for an Exchange session, and can include a collection name associated with content to receive from the client device. The hosting service can receive a segment of the content by sending, over the Exchange session, an Interest that requests the segment of the content. Then, responsive to receiving a Content Object whose payload includes the requested segment of the content, the hosting service stores the Content Object in association with the content.

In some embodiments, the hosting service can receive the Exchange-initialization request in a second Interest message that includes a first name prefix associated with the hosting service, the SID, the name associated with the content, and the XID.

In some embodiments, the second Interest message includes the content name and the XID encrypted using a session key associated with the control channel.

In some embodiments, in response to receiving the Exchange-initialization request from the client device, the hosting service sends an acknowledgement (ACK) message that includes the SID and the XID.

In some embodiments, the hosting service can receive a Status-request message that includes the SID and the XID. The hosting service can respond to the Status-request message by returning an ACK message that includes a Cumulative ACK Name (CAN) to acknowledge a set of ordered Content Objects received via the Exchange session. The CAN includes a name for a latest Content Object in the set of ordered Content Objects, which acknowledges the set of ordered Content Objects whose names are up to and including the latest Content Object's name.

In some embodiments, the hosting service can receive, from the client device, a NEXT message that specifies a next object that can be requested by the hosting service.

In some embodiments, the hosting service can receive a second Interest message that includes an Exchange-closing request that includes the SID and the XID. Then, after returning a Content Object that acknowledges the Exchange-closing request, the hosting service closes the Exchange session.

## BRIEF DESCRIPTION OF THE FIGURES

FIG. 1 illustrates an exemplary computing environment that facilitates loading content to a hosting service in accordance with an embodiment.

FIG. 2 illustrates an exemplary communication between a client and a hosting service in accordance with an embodiment.

FIG. 3 presents a flow chart illustrating a method for establishing an Exchange session with a hosting service in accordance with an embodiment.

FIG. 4 presents a flow chart illustrating a method for managing an Exchange session with a hosting service in accordance with an embodiment.

FIG. 5 presents a flow chart illustrating a method for establishing an Exchange session with a client in accordance with an embodiment.

FIG. 6 presents a flow chart illustrating a method for managing an Exchange session with a client in accordance with an embodiment.

FIG. 7 illustrates an exemplary apparatus that facilitates loading content to a hosting service in accordance with an embodiment.

FIG. 8 illustrates an exemplary computer system that facilitates loading content to a hosting service in accordance with an embodiment.

In the figures, like reference numerals refer to the same figure elements.

## DETAILED DESCRIPTION

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

Overview

Embodiments of the present invention provide a content-exchange system that solves the problem of ensuring a secure transfer of data to a hosting service by implementing a Reliable Content Exchange (RCX) of a pipelined flow to the hosting service. RCX allows a client to establish one or more Exchange sessions with the hosting service, over CCN, and to control the flow of data to the hosting service across each Exchange session.

The RCX protocol includes a control channel between the client and service provider, which the client uses to manage a sliding data window. For example, the client can use the control channel to start or close an Exchange session between the client and the hosting service over CCN. The client also uses the RCX control channel to ask the hosting service to pull content from the client over an Exchange session, and to manage a windowed retrieval of the content to guarantee its transfer.

In some embodiments, the RCX protocol supports two types of transfer: ChunkedName and ManifestName. In a ChunkedName transfer, the content can be transferred over an Exchange channel using chunked user data. Chunked user data conforms to the Chunking Protocol, where a large piece of content is partitioned into a collection of "chunks," and the content's base name (e.g., "/foo/bar/slides.pdf') is extended for each chunk in a series to form a name where the terminal element in the name indicates the chunk number. For example, the chunk name "/foo/bar/slides.pdf/c5" includes the terminal name element "c5" that specifies the name is for the fifth chunk in the series. The client can generate a Content Object for each chunk, and assigns the corresponding chunked name to the Content Object. The client then provides the base name of a set of chunked Content Objects to the hosting service over the control channel, and the hosting service requests these chunked Content Objects by disseminating a pipeline of Interests over the Exchange session.

In a manifest approach, a chunked object called the "Manifest" lists the constituent Content Objects that are to be transferred, and includes their Content Object Hash (COH). In some embodiments, the COH values for the chunks listed in the Manifest can be hash-chained to safeguard against tampering of the individual chunks. The client can provide the chunked name for the Manifest to the hosting service over the control channel. The hosting service uses the Manifest's chunked name to receive the Manifest from the client over the Exchange session, and reads the Manifest to determine the chunked Content Objects it needs to request. The hosting service then requests these chunked Content Objects by disseminating a pipeline of Interests over the Exchange session. A description of Manifests is described in U.S. Patent Application No. 14/337,026 (Atty. Docket No. PARC-20140480US01, entitled "System for Distributing Nameless Objects using Self-Certifying Names," by inventor Marc E. Mosko, filed 21 July 2014), which is hereby incorporated by reference.

In some embodiments, the RCX protocol manages an Exchange session's sliding window using a Cumulative ACK Name (CAN) to indicate the last Content Object received by the hosting service. More specifically, the CAN indicates the largest in-order name received by the hosting service, and follows the natural order of the objects being transferred. This "largest in-order name" indicates that the hosting service has received the Content Objects in the sequence up to and including the Content Object specified by the CAN. The CAN naming strategy is useful because CCN names have a well-defined minimum (the empty name), but no well-defined "next" name except in the special case of a chunked stream using sequence numbers. Therefore, when a transfer begins, the initial CAN can include the zero-length empty name. Because this zero-length empty name does not specify any Content Objects that are to be transferred over an Exchange session, it does not conflict with names for any chunks that can potentially be transferred over the Exchange session. This zero-length empty name is hereinafter referred to as "EMPTY."

In the case of a ChunkedName transfer, the CAN follows the chunk number ordering. In the case of a ManifestName transfer, the CAN is derived from the natural order of the Content Objects listed in a Manifest Content Object. In some embodiments, a Manifest Content Object (hereinafter also referred to as a Manifest chunk) can itself reference other Manifest Content Objects. The natural order of the Content Objects can be determined by traversing the Manifest hierarchy. This order is defined as starting with the first Manifest chunk (e.g., a root Manifest) followed by the Content Object chunks in the order they are listed in the first Manifest chunk, followed by the next Manifest chunk and its listed Content Objects, and so on.

It is possible for the hosting service to request or receive chunks out of sequence, such as the Manifest chunks. However, for the purposes of reporting a Cumulative ACK Name, the RCX protocol imposes a definitive order on all the Content Objects in a collection.

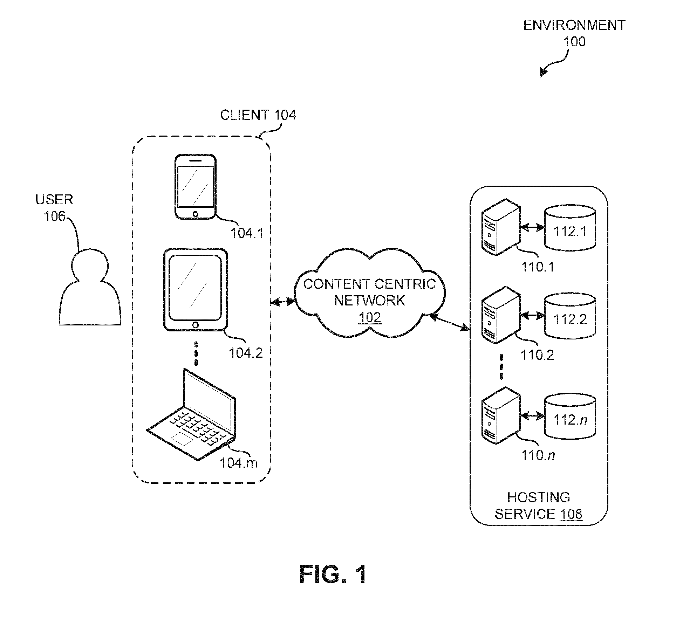

FIG. 1 illustrates an exemplary computing environment 100 that facilitates loading content to a hosting service in accordance with an embodiment. Computing environment 100 can include a content centric network (CCN) 102, which includes a client 104, a hosting service 108, and a plurality of CCN nodes (e.g., routers and member computer nodes) that can forward Interests and Content Objects based on their name or name prefix.

Client 104 can include any computing device coupled to CCN 102, such as a smartphone 104.1, a tablet computer 104.2, and/or a server or personal computer 104.*m*. During operation, a user 106 can use client 104 to establish one or more Exchange sessions with hosting service 108, and publish content to hosting service 108 via the Exchange sessions. Client 104 can send a SESSION INITIALIZE message to establish an RCX session with hosting service 108, and uses the control channel of the RCX session to send a START message (e.g., an Exchange-initialization request) that establishes a secure Exchange session with hosting service 108. This START message names the content that is to be retrieved and hosted by hosting service 108.

In some embodiments, client 104 manages its send window for an Exchange session with hosting service 108 by sending NEXT messages that indicate the name of the next chunk to be published. For example, if client 104 is publishing a live data feed, client 104 can continue to issue a NEXT message as it publishes more content. In the case of a ChunkedName transfer, the NEXT message includes the name of the next Content Object in the stream. In the case of a ManifestName transfer, the NEXT message includes the name for the next chunk of the Manifest to be published.

Hosting service 108 can include a set of distributed servers 110 that host content over CCN 102. For example, servers 110 can include or be coupled to storage devices 112 that store content published by a variety of content producers. For example, once client 104 establishes an Exchange session with hosting service 108, one or more of servers 110 can disseminate Interests for the Content Objects published over the Exchange session. The Exchange session is a secure connection between client 104 and hosting service 108, which ensures that servers 110 receive the Content Objects published by client 104 and does not receive other Content Objects of the same name published by other (possibly malicious) entities. Hosting service 108 can manage its receive window by controlling the number of pending Interests it disseminates via the CCN Exchange session. For example, hosting service 108 can increase or decrease the size of the receive window according to current network conditions across CCN 102.

In some embodiments, hosting service 108 can then make these published Content Objects accessible over CCN 102 on behalf of client 104. For example, when a server 110 of hosting service 108 receives an Interest for a published Content Object, hosting service 108 can return the Content Object that satisfies the Interest based on the Content Object's name and/or hash value.

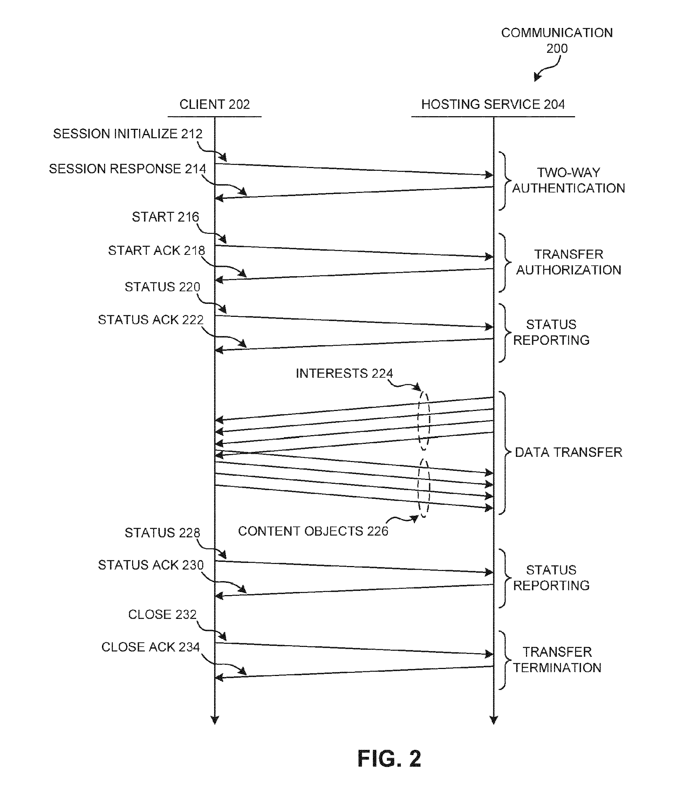

FIG. 2 illustrates exemplary communication 200 between a client 202 and a hosting service 204 in accordance with an embodiment. During operation, client 202 and hosting service 204 can establish a secure control channel by performing two-way authentication. Client 202 can send a SESSION INITIALIZE 212 message to storage device 204, which storage device 204 uses to authenticate client 202. Similarly, hosting service 204 can return a SESSION RESPONSE message 214 that client 202 can use to authenticate hosting service 204. If the two-way authentication is successful, client 202 and hosting service 204 have established a secure control channel with a Session Identifier (SID), and optionally with a Session Key (SK).

Client 202 can use the control channel to initiate one or more Exchange sessions with the hosting service, such that the hosting service can use each Exchange session to retrieve a corresponding data collection. Each Exchange session is a specific request for hosting service 204 to obtain named content. The named content may be partitioned into a sequence of ChunkedNamed Content Objects that conform to the standard chunking protocol. Alternatively, the named content may be a Manifest (e.g., a secure catalogue of Content Objects), which identifies the exact names for Content Objects to obtain, including their hash values.

Client 202 can perform a transfer authorization process to establish an Exchange session with the hosting service by sending a "START" message 216 (e.g., an Exchange-initialization request) to the hosting service, and receiving a "START ACK" message 218. START 216 includes the SID, a client-generated Exchange Identifier (XID), a name for the data collection that client 202 has published and can be transferred over the Exchange session. START 216 can also include a Key Identifier (KeyId) that is to be included in the Interest messages that hosting service 204 sends over the Exchange session. START ACK 218 includes the SID and the XID.

In some embodiments, the name for the published data collection can include, for example, a chunked name for the collection or a name for a Manifest of the collection. Hosting service 204 can use the collection's name to derive or determine the names for the individual Content Objects that client 202 has published in the collection. This collection of published Content Objects forms a "data window" that hosting service 204 can retrieve over the Exchange session.

Recall that the Exchange sessions are implemented over CCN. Once at least one Exchange session has been initiated, hosting service 204 can obtain the published Content Objects by disseminating Interests 224 over the secure Exchange session, and receiving the corresponding Content Objects 224 over the secure Exchange session. Hosting service 204 can manage a "receive window" of pending Interests by controlling the rate at which it disseminates Interests. Each time hosting service 204 disseminates an Interest for a segment of a published data collection, this segment is added to the receive window. Also, each time hosting service 204 receives a Content Object that satisfies an Interest, hosting service 204 removes the corresponding data segment from the receive window.

In some embodiments, client 202 can use the control channel to request a status reporting for a given Exchange session from hosting service 204. To request a status reporting, client 202 can send a STATUS message that includes the SID, the XID for the Exchange session, and a Sequence Number identifier (SeqNum) for the STATUS message. The hosting service returns a STATUS ACK message that includes the SID, the XID, the SeqNum for the corresponding STATUS message, and a CAN name for the latest Content Object that hosting service 204 has received from the collection.

For example, the first STATUS message that client 202 sends to hosting service 204 (e.g., STATUS 220) may have a SeqNum value of "1" and a second STATUS message that client 202 sends to hosting service 204 (e.g., STATUS 228) may have a value of "2." Also, if client 202 sends STATUS message 220 to hosting service 204 before hosting service 204 has received any Content Objects over the Exchange session, hosting service 204 returns a STATUS ACK 222 whose CAN is "EMPTY," meaning that hosting service 204 has received the Content Objects up to and including the empty name (e.g., nothing). On the other hand, if client 202 sends STATUS message 228 after hosting service 204 has downloaded the full data collection, hosting service returns a STATUS ACK 230 whose CAN is the last Content Object in the data collection, meaning that hosting service 204 has received the Content Objects up to and including the last Content Object in the collection.

Client 202 can then close the Exchange session once client 202 has determined that hosting service 204 has received the content that client 202 published over the Exchange session (e.g., based on the CAN of STATUS ACK 230). Client 202 can close the Exchange session by using the control channel to send a CLOSE message 232 to hosting service 204, such that CLOSE message 232 includes the SID for the control channel and the XID for the Exchange session being closed. Hosting service acknowledges that the Exchange session has been closed by returning a CLOSE ACK message 234 that also includes the SID and the XID.

In some embodiments, the control channel can be implemented over CCN. For example, client 202 can disseminate START message 216 over CCN by disseminating the following Interest:

$$/provider/SID/E\_sk(\{XID, Name, [KeyId|Hash], START\}) \qquad (1)$$

In Interest (1), the prefix "/provider" includes a routable prefix associated with the hosting service, and the name of the hosting service. The next name element "SID" identifies the session, which is associated with a Session Key (SK). The next element "E_sk()" includes a marshaled data structure, optionally encrypted with the session key, SK. Some exemplary implementations may use, for example, a Type-Length-Value (TLV) binary format, an External Data Representation (XDR) format, or any other transfer encoding format now known or later developed.

The marshalled data structure includes the XID for the Exchange session, the Name for the data collection to transfer, and the START keyword. The XID is generated by client 202 and can be any unique number, such as a random generated number. The Name element specifies a ChunkedName or ManifestName for a data collection. The START keyword indicates that the Interest includes a request to start an Exchange session.

In some embodiments, the ChunkedName conforms to the standard chunking protocol. If the ChunkedName is a base name without a chunk number (e.g., "/foo/bar"), hosting service 204 will open a pipeline with a data window that includes all the chunks in the collection (e.g., "/foo/bar/c0," ..., "/foo/bar/c99"). If the ChunkedName corresponds to a single chunk name (e.g., "/foo/bar/c33"), hosting service 204 will open a pipeline with a data window that includes the specified chunk.

In some embodiments, the ManifestName identifies a secure catalog that enumerates a collection of Content Objects to transfer. The ManifestName complies with the chunking protocol. For example, hosting service 204 processes a Manifest's name without a chunk number (e.g., "/foo/bar/M0") by opening a pipeline with a data window that includes all Content Objects identified by the manifest. However, if the Manifest's name is followed by a chunk number (e.g., "/foo/bar/M0/I0"), hosting service 204 will open a pipeline with a data window that includes the Content Object identified by Manifest "M0," item "0."

In some embodiments, START message 220 can include an optional KeyId restriction and/or a Hash restriction that hosting service 204 is to include in the Interests it disseminates over the Exchange session. They KeyId specifies a Key Identifier associated with a target CCN content producer (e.g., client 202), and the Hash restriction specifies a hash value for a Content Object (e.g., a single chunk). When hosting service 204 includes the KeyId restriction in an Interest, other CCN nodes forward the Interest toward the target CCN content producer that is associated with the KeyId. Similarly, when hosting service 204 includes the Hash restriction in an Interest, the target producer returns a Content Object whose hash value matches the Hash restriction.

Client 202 can disseminate STATUS message 220 over CCN by disseminating the following Interest:

$$/provider/SID/E\_sk(\{XID, SeqNum, STATUS\}) \qquad (2)$$

In Interest (2), the prefix "/provider" again corresponds to hosting service 204, and the name element "SID" identifies the session between client 202 and hosting service 204, which can be associated with a Session Key (SK). The next element "E_sk()" includes a marshaled data structure, optionally encrypted with the session key, SK. The contents of the marshalled data structure include the identifier for the Exchange session (XID), a sequence number that identifies the STATUS message (SeqNum), and the STATUS keyword that indicates a request for a status from hosting service 204.

Client 202 can disseminate CLOSE message 232 over CCN by disseminating the following Interest:

$$/provider/SID/E\_sk(\{XID, CLOSE\}) \qquad (3)$$

In Interest (3), the prefix "/provider" again corresponds to hosting service 204, and the name element "SID" identifies the session between client 202 and hosting service 204. The next element "E_sk()" includes a marshaled data structure (optionally encrypted with the session key, SK), whose contents include the XID identifier and the CLOSE keyword that instructs hosting service 204 to close the Exchange session associated with the identifier XID.

In some embodiments, client 202 or hosting service 204 can disseminate an ABORT message over CCN to abort the Exchange session:

$$/\text{target}/\text{SID}/\text{E\_sk}(\{XID, ABORT\}) \qquad\qquad (4)$$

In Interest (4), the ABORT keyword notifies the recipient "/target" (e.g., client 202 or hosting service 204) that the Exchange session associated with identifier XID is over.

Client Device

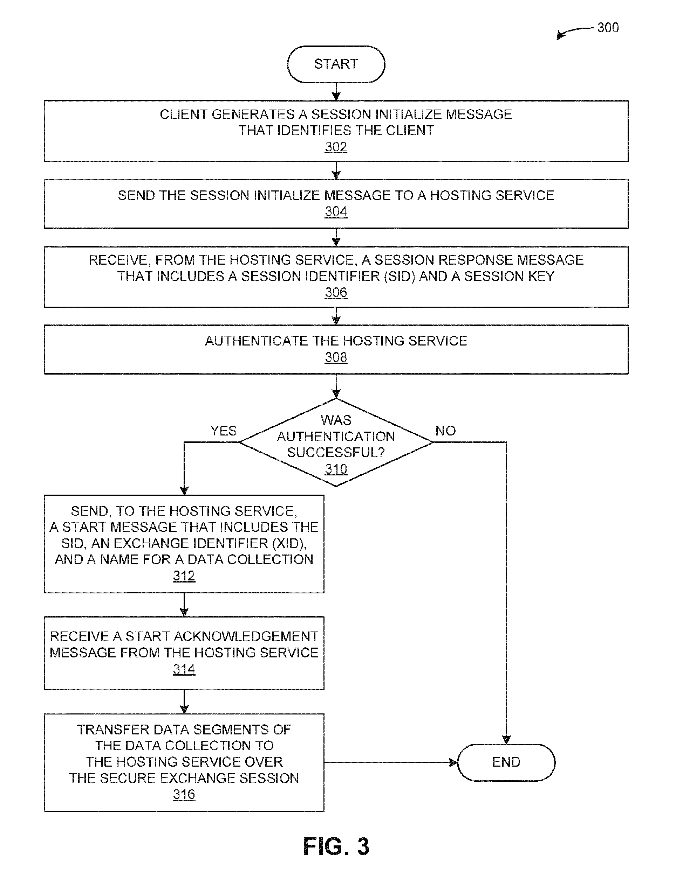

FIG. 3 presents a flow chart illustrating a method 300 for establishing an Exchange session with a hosting service in accordance with an embodiment. During operation, a client can first establish a control channel with the hosting service by exchanging identification and/or authentication information with the hosting service. The control channel can exist over any computer network now known or later developed, such as an IP-based network or a content centric network (CCN). The client can use the control channel to start one or more Exchange sessions, and to control a window for an Exchange session.

To establish the control channel, the client can generate a SESSION INITIALIZE message that identifies the client (operation 302), and sends the SESSION INITIALIZE message to the hosting service (operation 304). The SESSION INITIALIZE message can include any information that identifies the client, such as by providing an identity via cryptographic keys (e.g., via a digital certificate), or by providing authentication credentials (e.g., a user name and password), etc.

If the hosting service successfully authenticates or authorizes the client, the client will receive a SESSION RESPONSE message from the hosting service (operation 306). The SESSION RESPONSE message can include a Session Identifier (SID) that identifies the Exchange session between the client and the hosting service, and in some embodiments, can also include a session key (SK) for the Exchange session. In some embodiments, the hosting service can securely transfer the session key to the client, and can maintain a secure session key via a key rotation protocol. The client and hosting service can use the Session Key to encrypt user data in names and payloads of packets transmitted over the control channel.

The client uses the SESSION RESPONSE message to authenticate the hosting service (operation 308), and determines whether authentication was successful (operation 310). If authentication was not successful, the client can perform a remedial action. However, if client authenticates the hosting service, the control channel has been established, and the client can use the control channel to establish and manage one or more Exchange sessions. For example, the client can establish secure Exchange session by sending a "START" message to the hosting service via the control channel (operation 312). The START message can include the Session Identifier, a Exchange Identifier (XID) for the Exchange session, a name for the data collection that is to be stored by the hosting service. The START message can also include a KeyID restriction, which the hosting service can include in its Interest messages when requesting segments of the data collection over the CCN-based Exchange session.

If the hosting service can store the data collection, the hosting service returns a START Acknowledgement (START ACK) message via the control channel. Hence, once the client receives the START ACK message from the hosting service (operation 314), the client proceeds to transfer data segments of the data collection to the hosting service over the secure Exchange session (operation 316). Specifically, the client can receive CCN Interest messages for segments of the data collection over the secure Exchange session, and processes these Interest messages to return Content Objects that include the corresponding data segments. In a typical CCN network, a network node that receives an Interest does not typically know where the Interest came from. However, when using a secure Exchange session to transfer CCN packets, only network nodes associated with the authenticated hosting service can disseminate valid Interests for the data collection hosted by the client. The client can ignore any Interests for the data collection that were not transmitted over the secure Exchange session.

Recall that an Exchange session's data window includes a collection of published Content Objects that the hosting service can request from the client. In some embodiments, the client can adjust an Exchange session's data window while the Exchange session is active. This allows the client to add segments to a data collection, such as a live media stream, and to inform the hosting service of the new data segments in the collection.

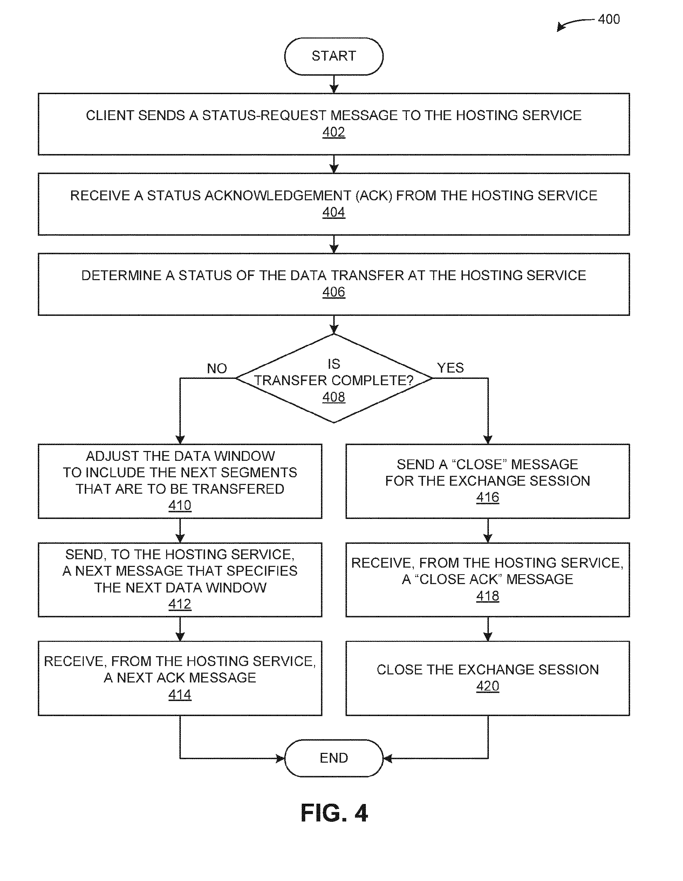

FIG. 4 presents a flow chart illustrating a method 400 for managing an Exchange session with a hosting service in accordance with an embodiment. During operation, the client can send a "STATUS" request message to the hosting service over the control channel (operation 402). The STATUS request message can include the Session ID and the XID to identify the Exchange session, and can include a status sequence number (SeqNum) that differentiates this STATUS request message from other STATUS request messages.

When the client receives a STATUS ACK from the hosting service over the control channel (operation 404), the client can match the STATUS ACK to the STATUS request message using the SeqNum, and analyzes the STATUS ACK to determine a status of the data transfer at the hosting service (operation 406). The client then determines if the Exchange session's transfer is complete (operation 408).

If the transfer is not complete, the client can adjust the data window to include the next segments that are to be transferred (operation 410), and sends a "NEXT" message to the hosting service via the control channel (operation 412). This NEXT message specifies the next data window, and includes the SID, the XID, the KeyID (if any), and a SeqNum for the NEXT message. In some embodiments, the NEXT message specifies the next data window by including a name for the next chunked object to be published (e.g., a Content Object in a data collection), or by including the name of the next Manifest to be published. For example, in the case of a ChunkedName transfer, the NEXT message includes the name of the next chunk in the stream. In the case of a ManifestName transfer, the NEXT message includes the name for the next chunk listed in the Manifest (or in any Manifest of a Manifest hierarchy).

Client can disseminate the NEXT message over CCN by disseminating the following Interest:

$$\text{/provider/SID/E\_sk}(\{\text{XID},\text{SeqNum},\text{NextName},\text{NEXT}\}) \qquad (5)$$

In Interest (5), the prefix "/provider" includes a routable prefix associated with the hosting service, and the name of the hosting service. The name element "SID" identifies the session between the client and the hosting service, which can be associated with a Session Key (SK). The next element "E_sk()" includes a marshaled data structure, optionally encrypted with the session key, SK. The contents of the marshalled data structure includes the identifier for the Exchange session (XID), a sequence number that identifies the STATUS message (SeqNum), and the NEXT keyword that indicates the Interest includes an update to the data window. The marshalled data structure also includes a "NextName" element, which can be a MarshalledName or a ManifestName, for additional segments that the client is publishing over the Exchange session.

If the hosting service can store the additional data published by the next data window, the client will receive a "NEXT ACK" message from the hosting service that acknowledges the next data window. On the other hand, if the Exchange session's transfer is complete, the client can generate a "CLOSE" message that includes the SID and the XID, and sends the CLOSE message to the hosting service over the control channel to close the Exchange session (operation 416). The hosting service acknowledges the closing of the Exchange session by returning a "CLOSE ACK" message that includes the SID and the XID. Once the client receives the CLOSE ACK message from the hosting service over the control channel (operation 418), the client closes the Exchange session (operation 420).

Recall that it's possible for the client and the hosting service to have multiple active Exchange sessions associated with the SID. In some embodiments, when the client closes one Exchange session, the hosting service can continue to disseminate Interests to obtain additional data segments over the other active Exchange sessions.

**Hosting Service**

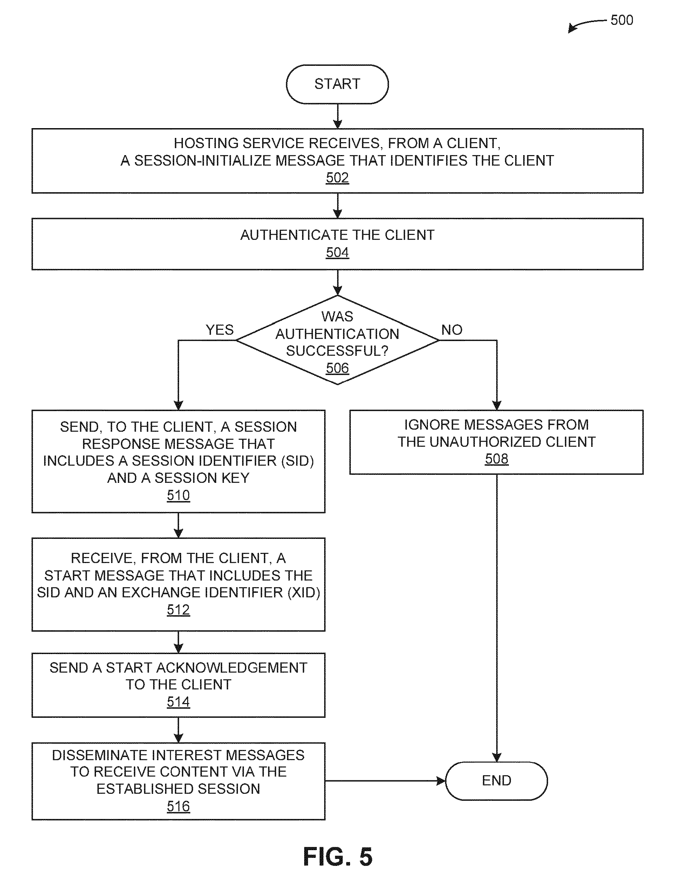

FIG. 5 presents a flow chart illustrating a method 500 for establishing an Exchange session with a client in accordance with an embodiment. During operation, the hosting service can receive, from the client, a SESSION INITIALIZE message that identifies the client (operation 602), and uses the client's identification information to authenticate the client (operation 504). The hosting service then determines whether authentication was successful (operation 506). If authentication was not successful, the hosting service can avoid establishing the control channel by not returning a SESSION RESPONSE message, and ignores messages from the unauthorized client (operation 508).

On the other hand, if the hosting service successfully authenticates the client, the hosting service sends a SESSION RESPONSE message to the client (operation 510) to finish establishing the control channel. This SESSION RESPONSE message includes a Session Identifier (SID) and a Session Key (SK) for the control channel. The hosting service can then receive a START message from the client over the control channel (operation 512). The START message can include the SID, an Exchange Identifier (XID) for the Exchange session, and a name for the data collection that is to be stored by the hosting service. The START message can also include a KeyID restriction, which the hosting service can include in its Interest messages when requesting segments of the data collection over the CCN-based Exchange session.

The hosting service then sends a START ACK message to the client over the control channel to confirm the Exchange session (operation 514). The hosting service then proceeds to obtain segments of the data collection from the client over the secure Exchange session (operation 516). Recall that the Exchange session is realized over CCN. Hence, the hosting service can obtain the data collection by disseminating Interests for data segments within the Exchange session's data window. The hosting service can control the size of its receive window by restricting the number of pending Interests to stay within a target maximum-size or range for its receive window.

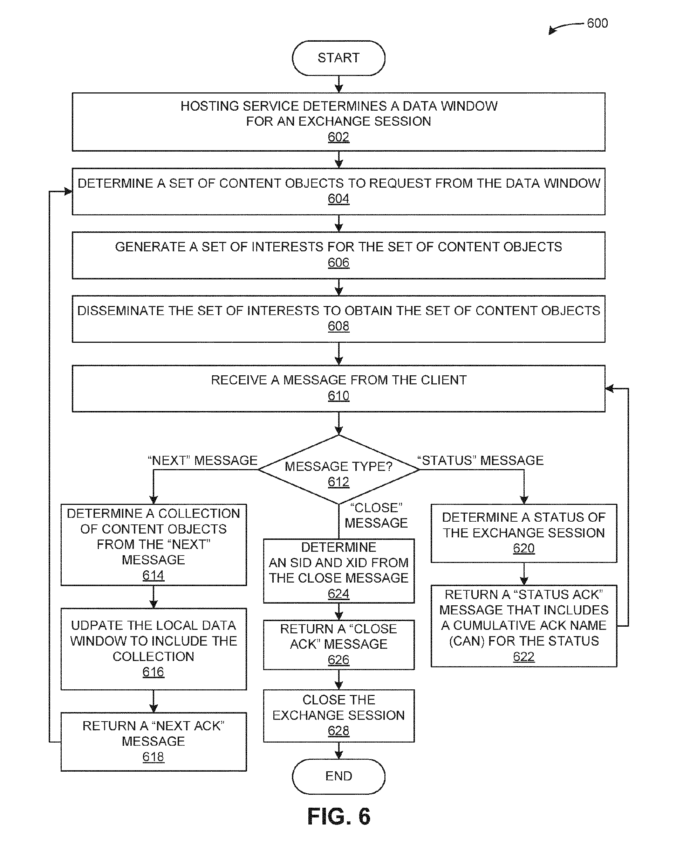

FIG. 6 presents a flow chart illustrating a method 600 for managing an Exchange session with a client in accordance with an embodiment. During operation, the hosting service can determine a data window for an Exchange session (operation 602). This data window may include a collection of Content Objects that the client has published, and that the hosting service can request from the client. The hosting service can receive the names for Content Objects to add to the data window from the client, either as chunked names, or as Manifest names.

The hosting service determines a set of Content Objects in the data window to request from the client (operation 604), and generates a set of Interests for the set of Content Objects (operation 606). The hosting service then disseminates the set of Interests over the secure Exchange session to obtain the set of Content Objects (operation 608). In some embodiments, the hosting service can manage its receive window by controlling the rate at which it disseminates Interests. The hosting service's receive window corresponds to a set of pending Interests for which the hosting service is awaiting Content Objects. The hosting service adds a Content Object to the receive window when it disseminates an Interest for this Content Object over the Exchange session, and removes the Content Object from the receive window once it receives the Content Object.

Recall that the client can manage the Exchange session by sending messages to the hosting service via the control channel. The client can send, for example, a "STATUS" message to determine the Content Objects that the hosting service has received successfully, a "NEXT" message to add Content Objects to the data window, and a "CLOSE" message to close the Exchange session.

When hosting service receives a message from the client over the control channel (operation 610), the hosting service determines a type for the message (operation 612). If the message is a "NEXT" message, the hosting service can analyze the NEXT message to determine a collection of Content Objects to add to the data window (operation 614). The NEXT message can include the SID, the XID, a SeqNum, and a name for the data collection that is to be stored by the hosting service. The NEXT message can also include a KeyID restriction, which the hosting service can include in its Interest messages when requesting segments of the data collection over the CCN-based Exchange session. The hosting service updates the local data window to include a Content Object or a collection of Content Objects specified in the new data window (operation 616), and sends a NEXT ACK message to the client (operation 618). The hosting service then returns to operation 604 to disseminate additional Interests based on the updated data window. The NEXT ACK message can include the SID, the XID, and the SeqNum from the NEXT message.

If the message is a "STATUS" message, the hosting service can determine a status of the Exchange session (operation 620), and returns a "STATUS ACK" message that includes a Cumulative ACK Name (CAN) that encapsulates the Content Objects of the data collection that have been received (operation 622). The STATUS message from the client can include the SID, the XID, and a SeqNum for the STATUS message. The STATUS ACK message can include the SID, the XID, the SeqNum from the STATUS message, and the CAN.

If the message is a "CLOSE" message, the hosting service determines a Session ID (SID) and an Exchange Identifier (XID) from the CLOSE message to identify the Exchange session that is being closed (operation 624). The hosting service then returns a CLOSE ACK message that includes the SID and the XID (operation 626) and closes the Exchange session associated with the SID and the XID (operation 628).

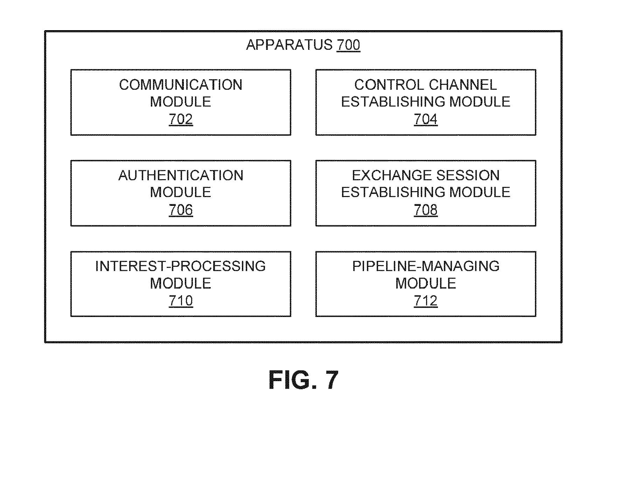

FIG. 7 illustrates an exemplary apparatus 700 that facilitates loading content to a hosting service in accordance with an embodiment. Apparatus 700 can comprise a plurality of modules which may communicate with one another via a wired or wireless communication channel. Apparatus 700 may be realized using one or more integrated circuits, and may include fewer or more modules than those shown in FIG. 7. Further, apparatus 700 may be integrated in a computer system, or realized as a separate device which is capable of communicating with other computer systems and/or devices. Specifically, apparatus 700 can comprise a communication module 702, a control channel establishing module 704, an authentication module 706, an exchange session establishing module 708, an Interest-processing module 710, and a pipeline-managing module 712.

In some embodiments, communication module 702 can send and/or receive data over a computer network, such as an Internet Protocol (IP) based network, a Content Centric Network (CCN), an Information Centric Network (ICN), or any network architecture now known or later developed. Control channel establishing module 704 can establish a control channel with a hosting service that is to host content on behalf of apparatus 700, and authentication module 706 can authenticate the hosting service.

Exchange session establishing module 708 can use the control channel to establish an Exchange session with the hosting service, for sending content to the hosting service. Interest-processing module 710 can process Interests received over the Exchange session for requesting segments of the content, and can return Content Objects that include the requested segments of the content. Pipeline-managing module 712 can manage a pipelined flow of the content's segments by adjusting a data window for the content's segments.

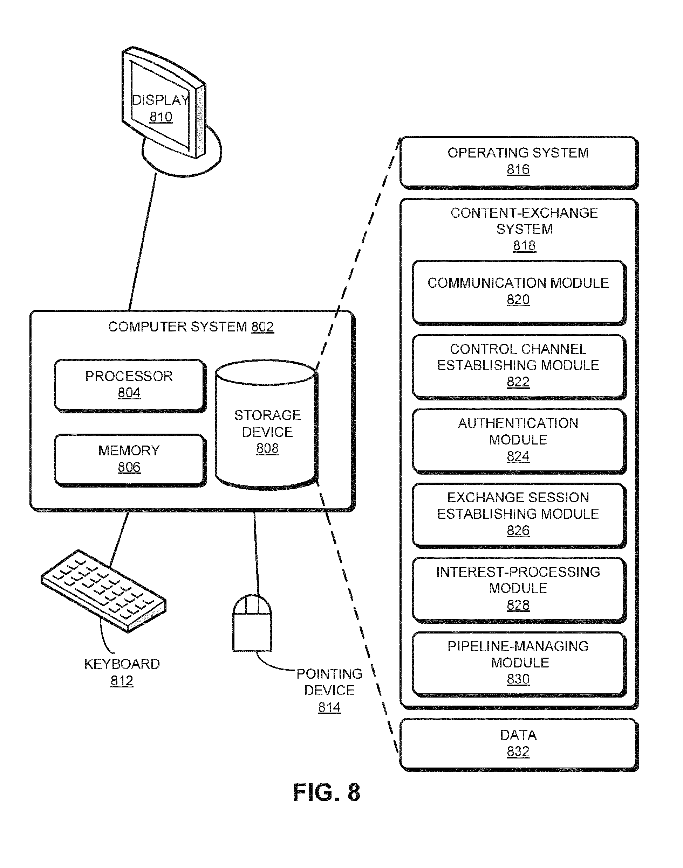

FIG. 8 illustrates an exemplary computer system 802 that facilitates loading content to a hosting service in accordance with an embodiment. Computer system 802 includes a processor 804, a memory 806, and a storage device 808. Memory 806 can include a volatile memory (e.g., RAM) that serves as a managed memory, and can be used to store one or more memory pools. Furthermore, computer system 802 can be coupled to a display device 810, a keyboard 812, and a pointing device 814. Storage device 808 can store operating system 816, a content-exchange system 818, and data 826.

Content-exchange system 818 can include instructions, which when executed by computer system 802, can cause computer system 802 to perform methods and/or processes described in this disclosure. Specifically, content-exchange system 818 may include instructions for sending and/or receiving data over a computer network, such as an Internet Protocol (IP) based network, a Content Centric Network (CCN), an Information Centric Network (ICN), or any network architecture now known or later developed (communication module 820). Further, content-exchange system 818 can include instructions for establishing a control channel with a hosting service that is to host content on behalf of computer system 802 (control channel establishing module 822), and can include instructions for authenticating the hosting service (authentication module 824).

Content-exchange system 818 can also include instructions for using the control channel to establish an Exchange session with the hosting service, to send content to the hosting service (authentication module 826). Content-exchange system 818 can also include instructions for processing Interests received over the Exchange session for requesting segments of the content, and for returning Content Objects that include the requested segments of the content (authentication module 828). Content-exchange system 818 can also include instructions for managing a pipelined flow of the content's segments by adjusting a data window for the content's segments (authentication module 830).

Data 826 can include any data that is required as input or that is generated as output by the methods and/or processes described in this disclosure. Specifically, data 826 can store at least a collection of data to publish.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, the methods and processes described above can be included in hardware modules. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

The foregoing descriptions of embodiments of the present invention have been presented for purposes of illustration and description only. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

**Claims**

1. A computer-implemented method for establishing a content exchange session over a Content Centric Network (CCN), the method comprising:

   initiating, by a computing device, a control channel with the hosting service;
   selecting content to send to the hosting service;
   generating an Exchange identifier (XID) for an Exchange session for the selected content;
   sending, via the control channel, an Exchange-initialization request to the hosting service, wherein the Exchange-initialization request includes a collection name associated with the selected content and the XID for the Exchange session; and
   responsive to receiving, over the Exchange session, an Interest that requests a segment of the selected content, returning a Content Object whose payload includes the requested segment of the content.

2. The method of claim 1, wherein initiating a control channel with the hosting service involves providing authentication information to the hosting service.

3. The method of claim 1, wherein the content includes a collection of data chunks that are numbered sequentially, and wherein the collection name includes a Chunked Name for the content.

4. The method of claim 1, wherein the collection name includes a Manifest name for the content, wherein the Manifest name is derived based on objects named in a Manifest for the content.

5. The method of claim 1, wherein sending the Exchange-initialization request to the hosting service involves sending a second Interest message whose name comprises a first name prefix associated with the hosting service, a session identifier (SID) for the control channel, the name associated with the selected content, and the XID.

6. The method of claim 1, wherein responsive to sending the Exchange-initialization request to the hosting service, the method further comprises receiving an acknowledgement (ACK) message that includes the XID and a session identifier (SID) for the control channel.

7. The method of claim 6, wherein the second Interest message name includes the content name and the XID encrypted using a session key associated with the control channel.

8. The method of claim 1, further comprising:

   sending, to the hosting service, a Status-request message that includes the XID that identifies the Exchange session; and
   receiving an ACK message that includes a Cumulative ACK Name (CAN) to acknowledge a set of ordered Content Objects received via the Exchange session, wherein the CAN includes a name for a latest Content Object in the set of ordered Content Objects, which acknowledges the set of ordered Content Objects whose names are up to and including the latest Content Object's name.

9. A non-transitory computer-readable storage medium storing instructions that when executed by a computer cause the computer to perform a method for establishing a content exchange session over a Content Centric Network (CCN), the method comprising:

   initiating a control channel with a hosting service;
   selecting content to send to the hosting service;
   generating an Exchange identifier (XID) for an Exchange session for the selected content;
   sending, via the control channel, an Exchange-initialization request to the hosting service, wherein the Exchange-initialization request includes the SID, a collection name associated with the selected content, and the XID for the Exchange session; and
   responsive to receiving, over the Exchange session, an Interest that requests a segment of the selected content, returning a Content Object whose payload includes the requested segment of the content.

10. A computer system for a hosting service, comprising:

   one or more processors;
   a memory; and
   a computer-readable medium coupled to the one or more processors storing instructions stored that, when executed by the one or more processors, cause the computing system to perform a method comprising:

   initiating a control channel with a client device, which involves sending a session identifier (SID) for the control channel to the client device;
   receiving, via the control channel, an Exchange-initialization request from the client device, wherein the Exchange-initialization request includes an Exchange identifier (XID) for an Exchange session, and includes a collection name associated with content to receive from the client device;
   sending, over the Exchange session, an Interest that requests a segment of the content; and
   responsive to receiving a Content Object whose payload includes the requested segment of the content, storing the Content Object in association with the content.

FIG. 1

**FIG. 2**

```
                                                    ⟵ 300

                    ( START )
                        │
                        ▼
    ┌─────────────────────────────────────────────┐
    │  CLIENT GENERATES A SESSION INITIALIZE       │
    │  MESSAGE THAT IDENTIFIES THE CLIENT          │
    │  302                                          │
    └─────────────────────────────────────────────┘
                        │
                        ▼
    ┌─────────────────────────────────────────────┐
    │  SEND THE SESSION INITIALIZE MESSAGE TO A     │
    │  HOSTING SERVICE                              │
    │  304                                          │
    └─────────────────────────────────────────────┘
                        │
                        ▼
    ┌─────────────────────────────────────────────┐
    │  RECEIVE, FROM THE HOSTING SERVICE, A         │
    │  SESSION RESPONSE MESSAGE THAT INCLUDES A     │
    │  SESSION IDENTIFIER (SID) AND A SESSION KEY   │
    │  306                                          │
    └─────────────────────────────────────────────┘
                        │
                        ▼
    ┌─────────────────────────────────────────────┐
    │  AUTHENTICATE THE HOSTING SERVICE             │
    │  308                                          │
    └─────────────────────────────────────────────┘
                        │
                        ▼
             ╱◆╲
      YES  ╱  WAS   ╲  NO
    ◄─────  AUTHENTICATION  ─────►
           ╲ SUCCESSFUL? ╱
             ╲  310  ╱
               ╲◆╱
        │                        │
        ▼                        │
    ┌──────────────────────────┐ │
    │  SEND, TO THE HOSTING     │ │
    │  SERVICE, A START MESSAGE │ │
    │  THAT INCLUDES THE SID,   │ │
    │  AN EXCHANGE IDENTIFIER   │ │
    │  (XID), AND A NAME FOR A  │ │
    │  DATA COLLECTION          │ │
    │  312                      │ │
    └──────────────────────────┘ │
        │                        │
        ▼                        │
    ┌──────────────────────────┐ │
    │  RECEIVE A START          │ │
    │  ACKNOWLEDGEMENT MESSAGE  │ │
    │  FROM THE HOSTING SERVICE │ │
    │  314                      │ │
    └──────────────────────────┘ │
        │                        │
        ▼                        ▼
    ┌──────────────────────────┐ ┌──────────┐
    │  TRANSFER DATA SEGMENTS   │ │  ( END ) │
    │  OF THE DATA COLLECTION   │ └──────────┘
    │  TO THE HOSTING SERVICE   │
    │  OVER THE SECURE          │
    │  EXCHANGE SESSION         │
    │  316                      │
    └──────────────────────────┘
```

**FIG. 3**

**FIG. 4**

500

START

HOSTING SERVICE RECEIVES, FROM A CLIENT,
A SESSION-INITIALIZE MESSAGE THAT IDENTIFIES THE CLIENT
502

AUTHENTICATE THE CLIENT
504

WAS
AUTHENTICATION
SUCCESSFUL?
506

YES

NO

SEND, TO THE CLIENT, A SESSION
RESPONSE MESSAGE THAT
INCLUDES A SESSION IDENTIFIER (SID)
AND A SESSION KEY
510

IGNORE MESSAGES FROM
THE UNAUTHORIZED CLIENT
508

RECEIVE, FROM THE CLIENT, A
START MESSAGE THAT INCLUDES THE
SID AND AN EXCHANGE IDENTIFIER (XID)
512

SEND A START ACKNOWLEDGEMENT
TO THE CLIENT
514

DISSEMINATE INTEREST MESSAGES
TO RECEIVE CONTENT VIA THE
ESTABLISHED SESSION
516

END

FIG. 5

600

START

HOSTING SERVICE DETERMINES A DATA WINDOW
FOR AN EXCHANGE SESSION
602

DETERMINE A SET OF CONTENT OBJECTS TO REQUEST FROM THE DATA WINDOW
604

GENERATE A SET OF INTERESTS FOR THE SET OF CONTENT OBJECTS
606

DISSEMINATE THE SET OF INTERESTS TO OBTAIN THE SET OF CONTENT OBJECTS
608

RECEIVE A MESSAGE FROM THE CLIENT
610

"NEXT" MESSAGE

MESSAGE TYPE?
612

"STATUS" MESSAGE

"CLOSE"
MESSAGE

DETERMINE A COLLECTION
OF CONTENT OBJECTS
FROM THE "NEXT"
MESSAGE
614

DETERMINE
AN SID AND XID FROM
THE CLOSE MESSAGE
624

DETERMINE A STATUS OF
THE EXCHANGE SESSION
620

UDPATE THE LOCAL DATA
WINDOW TO INCLUDE THE
COLLECTION
616

RETURN A "CLOSE
ACK" MESSAGE
626

RETURN A "STATUS ACK"
MESSAGE THAT INCLUDES
A CUMULATIVE ACK NAME
(CAN) FOR THE STATUS
622

RETURN A "NEXT ACK"
MESSAGE
618

CLOSE THE
EXCHANGE SESSION
628

END

# FIG. 6

APPARATUS 700

| COMMUNICATION MODULE 702 | CONTROL CHANNEL ESTABLISHING MODULE 704 |
|---|---|
| AUTHENTICATION MODULE 706 | EXCHANGE SESSION ESTABLISHING MODULE 708 |
| INTEREST-PROCESSING MODULE 710 | PIPELINE-MANAGING MODULE 712 |

**FIG. 7**

DISPLAY
810

OPERATING SYSTEM
816

CONTENT-EXCHANGE
SYSTEM
818

COMMUNICATION MODULE
820

CONTROL CHANNEL
ESTABLISHING MODULE
822

AUTHENTICATION
MODULE
824

EXCHANGE SESSION
ESTABLISHING MODULE
826

INTEREST-PROCESSING
MODULE
828

PIPELINE-MANAGING
MODULE
830

COMPUTER SYSTEM 802

PROCESSOR
804

STORAGE
DEVICE
808

MEMORY
806

DATA
832

KEYBOARD
812

POINTING
DEVICE
814

**FIG. 8**

Europäisches
Patentamt
European
Patent Office
Office européen
des brevets

**EUROPEAN SEARCH REPORT**

Application Number

EP 15 18 1877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRISTOS TSILOPOULOS ET AL: "Supporting diverse traffic types in information centric networks", PROCEEDINGS OF THE ACM SIGCOMM WORKSHOP ON INFORMATION-CENTRIC NETWORKING, ACM, NEW YORK, NY, 19 August 2011 (2011-08-19), pages 13-18, XP058006745, DOI: 10.1145/2018584.2018588 ISBN: 978-1-4503-0801-4 * paragraph [4.2.on.demand.documents] * * paragraph [4.3.channels] * * paragraph [4.4.real.time.documents] * ----- | 1-10 | INV. G06F17/30 H04L29/12 H04N21/262 |
| T | Marc Mosko: "CCNx 1.0 Protocol Introduction", , 2 April 2014 (2014-04-02), XP055209848, Retrieved from the Internet: URL:http://www.ccnx.org/pubs/hhg/1.1 CCNx 1.0 Protocol Introduction.pdf [retrieved on 2015-08-27] * the whole document * ----- | 1-10 | |

TECHNICAL FIELDS
SEARCHED       (IPC)

G06F
H04L
H04N

The present search report has been drawn up for all claims

| Place of search | Date of completion of the search | Examiner |
|---|---|---|
| The Hague | 19 January 2016 | Lefebvre, Laurent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 84781413 A
- US 33817508 A
- US 33702614 A